# EUROPEAN PATENT APPLICATION

(11) **EP 4 428 179 A1**
(43) Date of publication of application: **11.09.2024**
(21) Application number: 22889872.2
(22) Date of filing: 27.10.2022
(51) Int. Cl.: C08G 71/04

(54) **POLYURETHANE PRODUCTION METHOD**

(30) Priority: 02.11.2021 JP 2021179763
(71) Applicant: National University Corporation Kobe University, Kobe-shi, Hyogo 657-8501 (JP); AGC INC., Chiyoda-ku, Tokyo 1008405 (JP)
(72) Inventor: TSUDA, Akihiko, Kobe-shi, Hyogo 657-8501 (JP); OKAZOE, Takashi, Tokyo 100-8405 (JP)
(74) Representative: TBK
(86) International application number: PCT/JP2022/040131
(87) International publication number: WO 2023/080052

(57) **Abstract**

The objective of the present invention is to provide a method for efficiently producing high quality polyurethane. The method for producing polyurethane according to the present invention is characterized in the steps of reacting the specific fluorocarbonate compound and a polyol compound to produce a carbonate compound, and reacting the carbonate compound represented and the specific an amino compound.

## Description

### TECHNICAL FIELD

The present invention relates to a method for efficiently producing high quality polyurethane.

### BACKGROUND ART

Since polyurethane is excellent in flexibility and elasticity, polyurethane can be used as a raw material of highly stretchable resin and fiber. On the one hand, polyurethane can also become hard and tough by changing the chemical structure thereof. In addition, polyurethane is a material very excellent in thermal property, sound absorbability, abrasion resistance, impact resistance, oil resistance or the like.

In general, polyurethane is produced by reacting a diisocyanate compound and a divalent alcohol compound. But there is a concern about the toxicity of an isocyanate compound. In addition, an isocyanate compound should be stored under a strict condition such as low humidity and low temperature, since an isocyanate compound is highly reactive and readily reacts with water. Polyurethane can be also produced by using phosgene instead of an isocyanate compound, and an isocyanate compound itself is industrially synthesized by reacting a primary amine compound and phosgene (Patent document 1 or the like). But phosgene is very toxic. For example, phosgene readily reacts with water to produce hydrogen chloride and has been historically used as a poison gas. In addition, when a compound is produced by using phosgene, a chloride component remains in the compound. For example, it is described in Non-patent document 1 that the polycarbonate produced from phosgene contains several 10 ppm to several 100 ppm of a chloride compound, even if the polycarbonate is thoroughly purified. A chloride component also remains in the polyurethane produced by using phosgene, and such a chloride component remaining in the polyurethane causes the yellowing of the polyurethane and has bad effects on metal and a living body. Thus, a technology to produce polyurethane without using an isocyanate compound or phosgene has been investigated.

For example, Patent document 2 and Non-patent documents 2 and 3 disclose methods for producing polyurethane by reacting a diamino compound and diphenyl carbonate optionally substituted with a nitro group and a fluoro group. But diphenyl carbonate itself is generally synthesized by reacting phosgene and phenol, and the method for synthesizing diphenyl carbonate without using phosgene requires many steps (Non-patent document 4). On the one hand, the inventors of the present invention have developed a method for safely and efficiently producing a carbonate derivative such as diphenyl carbonate (Patent documents 3 and 4).

Patent document 5 discloses a biscarbonate compound optionally having a fluoro group as a non-aqueous solvent for a non-aqueous electrolyte of a secondary battery.

### PRIOR ART DOCUMENT

### PATENT DOCUMENT

Patent document 1: WO 2017/104709
Patent document 2: US 9062160 B
Patent document 3: WO 2018/211952
Patent document 4: WO 2018/017349
Patent document 5: JP H10-149840 A

### NON-PATENT DOCUMENT

Non-patent document 1: FUKUOKA Shinsuke et al., Polymer Journal, Vol. 39, No. 2, pp. 91-114 (2007)
Non-patent document 2: Daniela M. Fidalgo et al., Journal of Polymer Science Part A, 2013, 51, pp. 463-470
Non-patent document 3: Amaury Bossion et al., Langmuir, 2017, 33, pp. 1959-1968
Non-patent document 4: KOMIYA Kyosuke, MASAMOTO Junzo, Transactions of the Japan Society for Production Management, Vol. 11, No. 2, pp. 109-114 (2005)

### DISCLOSURE OF THE INVENTION

### PROBLEMS TO BE SOLVED BY THE INVENTION

A technology for producing polyurethane by using diphenyl carbonate without using an isocyanate compound and phosgene has already been developed as described above. On the one hand, the inventors of the present invention found that phenol is produced by a side product in the above-described reaction and cannot be completely removed from the biscarbonate compound and polyurethane to remain in the polyurethane, and the remaining phenol deteriorates the quality of the polyurethane. For example, the remaining phenol is readily oxidized to color the polyurethane or decrease the polymerization degree of the polyurethane. In addition, the inventors experimentally found that the remaining phenol inhibits the polymerization reaction. Furthermore, polyurethane excellent in strength, heat resistance, chemical resistance and weather resistance is also required.

The objective of the present invention is to provide a method for efficiently producing high quality polyurethane.

### MEANS FOR SOLVING THE PROBLEMS

The inventors of the present invention repeated intensive studies in order to solve the above-described problems. As a result, the inventors completed the present invention by finding that the amount of a remaining fluoroalcohol compound as a side product can be reduced, and even if such a fluoroalcohol compound remains, the remaining fluoroalcohol compound can give preferred properties to the polyurethane, and the polyurethane having two or more-dimensional chemical structure can be produced with effectively suppressing a side reaction by producing the polyurethane with using the specific fluorocarbonate compound and the polyol compound.

The present invention is hereinafter described.

[1] A method for producing polyurethane, the method comprising the steps of:
   reacting a fluorocarbonate compound represented by the following formula (I) and a polyol compound represented by the following formula (II) to produce a carbonate compound represented by the following formula (III), 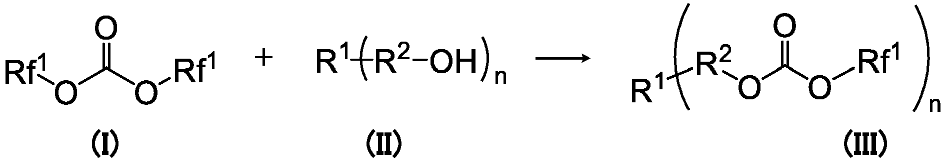 wherein
   Rf¹ is independently a monovalent aliphatic hydrocarbon group having a fluoro group,
   R¹ is an n-valent organic group,
   R² is a divalent organic group having a carbon number of 2 or more,
   n is an integer of 3 or more and 8 or less,
      and reacting the carbonate compound represented by the formula (III) and an amino compound represented by the following formula (IV):

      H₂N-R³-NH₂ (IV)
   wherein R³ is a divalent organic group.
[2] The method according to the above [1], wherein the fluorocarbonate compound represented by the formula (I) and the polyol compound represented by the formula (II) are reacted in the presence of a base.
[3] The method according to the above [1] or [2], wherein the R¹ is an n-valent C₂₋₁₀ chain hydrocarbon group optionally substituted with a fluoro group and optionally having an ether group.
[4] The method according to any one of the above [1] to [3], wherein the R² is a divalent C₂₋₁₀ chain hydrocarbon group optionally substituted with a fluoro group and optionally having an ether group.
[5] The method according to any one of the above [1] to [4], wherein the R² comprises a repeating unit represented by the formula: -[-O-R⁴]- wherein R⁴ is a C₁₋₈ alkane-diyl group optionally substituted with a fluoro group.
[6] The method according to any one of the above [1] to [5], wherein the R³ is a C₂₋₁₀₀ alkane-diyl group optionally substituted with a fluoro group and optionally having an ether group.
[7] The method according to any one of the above [1] to [6], wherein a biscarbonate compound represented by the following formula (V) is used in addition to the carbonate compound represented by the formula (III) for copolymerization, 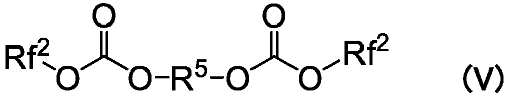 wherein
   Rf² is independently a monovalent aliphatic hydrocarbon group having a fluoro group,
   R⁵ is a divalent organic group.

### EFFECT OF THE INVENTION

Polyurethane can be produced without using a toxic isocyanate compound by the present invention method. In addition, it is not needed to use diphenyl carbonate, which is an alternative to phosgene. Thus, phenol, which is a byproduct derived from diphenyl carbonate and causes the coloration and the polymerization degree decrease of polyurethane, must not remain. Alternatively, a fluoroalcohol may remain. The amount of the remaining fluoroalcohol is smaller than that of phenol produced in case where diphenyl carbonate is used, and the remaining fluoroalcohol may give preferred properties to the polyurethane. Furthermore, a side reaction is suppressed in the present invention method by using the specific polyol compound, and the produced polyurethane may be excellent in strength, heat resistance, chemical resistance, weather resistance or the like due to the two or more-dimensional strong chemical structure. Accordingly, the present invention is industrially very useful as the technology to produce high quality polyurethane safely and efficiently.

### BRIEF DESCRIPTION OF THE DRAWINGS

Figure 1 is an appearance photograph of the polyurethane produced by the present invention method.
Figure 2 are appearance photographs of the polyurethane produced by the present invention method. Figure 2A is the reaction mixture immediately after the reaction, Figure 2B is the dried polyurethane, and Figure 2C is the polyurethane swollen by THF.

### MODE FOR CARRYING OUT THE INVENTION

The method for producing polyurethane according to the present invention comprises the step of reacting the fluorocarbonate compound represented by the formula (I) and the polyol compound represented by the formula (II) to produce the carbonate compound represented by the formula (III), and the step of reacting the carbonate compound represented by the formula (III) and the amino compound represented by the formula (IV) to produce polyurethane. The present invention is hereinafter specifically described, but the present invention is not restricted to the following specific examples. The "compound represented by the formula (x)" is abbreviated as the "compound (x)".

### 1. Production step of carbonate compound

The carbonate compound (III) is produced by reacting the fluorocarbonate compound (I) and the polyol compound (II) in this step. The preferred properties such as high strength, flexibility and repellency can be given to polyurethane by the combination of the R³ group in the amino compound (IV) and the R¹ and the R² in the carbonate compound (III) in the present invention.

The carbonate compound (III) can be conventionally synthesized under relatively low temperature by reacting the polyol compound (II) and diphenyl carbonate, which can be partly alternative for phosgene. But phenol derived from diphenyl carbonate is produced as the side product in such a case. Phenol is a solid under atmospheric temperature. Thus, for example, phenol is difficult to completely remove from the carbonate compound (III) by distillation, since the viscosity of the crude composition increases with proceeding distillation. The inventors of the present invention experimentally found that the remaining phenol inhibits the polymerization reaction, and since phenol is oxidized very easily, the phenol remaining in polyurethane as the target compound causes the coloration of the polyurethane.

On the one hand, the fluorocarbonate compound (I) is used in the present invention. When the fluorocarbonate compound (I) and the polyol compound (II) are reacted, a fluoroalcohol is produced as the side product but is easier to distil away than phenol. In addition, even if a fluoroalcohol remains in the polyurethane, the fluoroalcohol is clearly hardly oxidized in comparison with phenol and thus may not have a bad effect on the transparency of the polyurethane. The remaining fluoroalcohol may rather give preferred properties, such as repellency, antifouling property, weather resistance and abrasion resistance, to the polyurethane due to the fluoro group. Furthermore, when the fluorocarbonate compound (I) and the polyol compound (II) are reacted, the cyclization reaction of the polyol compound may possibly proceed as a side reaction in some cases; however, such a side reaction of the polyol compound (II) used in the present invention is suppressed especially due to the divalent organic group R² having a carbon number 2 or more.

The Rf¹ in the fluorocarbonate compound (I) are independently a monovalent aliphatic hydrocarbon group having a fluoro group. An example of the aliphatic hydrocarbon group having a fluoro group includes a monovalent C₁₋₁₀ chain aliphatic hydrocarbon group having a fluoro group, a monovalent C₃₋₁₀ cyclic aliphatic hydrocarbon group having a fluoro group, and a monovalent organic group formed by binding 2 or more and 5 or less of the groups. The above-described term, "independently", means that two of the Rf¹ in the fluorocarbonate compound (I) may be the same as or different from each other, and two of the Rf¹ are preferably the same as each other.

The "monovalent C₁₋₁₀ chain aliphatic hydrocarbon group" means a linear or branched monovalent saturated aliphatic hydrocarbon group or a linear or branched monovalent unsaturated aliphatic hydrocarbon group having a carbon number of 1 or more and 10 or less. An example of the monovalent C₁₋₁₀ chain aliphatic hydrocarbon group includes a C₁₋₁₀ alkyl group, a C₂₋₁₀ alkenyl group and a C₂₋₁₀ alkynyl group.

An example of the C₁₋₁₀ alkyl group includes methyl, ethyl, n-propyl, isopropyl, n-butyl, 1-methylpropyl, 2-methylpropyl, 1,1-dimethylethyl, 2,2-dimethylethyl, n-pentyl, n-hexyl, 2-hexyl, 3-hexyl, 4-methyl-2-pentyl, n-heptyl, n-octyl and n-decyl. The C₁₋₁₀ alkyl group is preferably a C₂₋₈ alkyl group and more preferably a C₄₋₆ alkyl group.

An example of the C₂₋₁₀ alkenyl group includes ethenyl (vinyl), 1-propenyl, 2-propenyl (allyl), butenyl, hexenyl, octenyl and decenyl. The C₂₋₁₀ alkenyl group is preferably a C₂₋₈ alkenyl group and more preferably a C₄₋₆ alkenyl group.

An example of the C₂₋₁₀ alkynyl group includes ethynyl, propynyl, butynyl, hexynyl, octynyl and pentadecynyl. The C₂₋₁₀ alkynyl group is preferably a C₂₋₈ alkynyl group and more preferably a C₂₋₆ alkynyl group.

The "monovalent C₃₋₁₀ cyclic aliphatic hydrocarbon group" means a monovalent cyclic saturated aliphatic hydrocarbon group or a monovalent cyclic unsaturated aliphatic hydrocarbon group having a carbon number of 1 or more and 10 or less. An example of the group includes a C₃₋₁₀ cycloalkyl group, a C₄₋₁₀ cycloalkenyl group and a C₄₋₁₀ cycloalkynyl group.

An example of the monovalent organic group formed by binding 2 or more and 5 or less of the monovalent C₁₋₁₀ chain aliphatic hydrocarbon group and the monovalent C₃₋₁₀ cyclic aliphatic hydrocarbon group includes a monovalent C₃₋₁₀ cyclic aliphatic hydrocarbon group-monovalent C₁₋₁₀ chain aliphatic hydrocarbon group and a monovalent C₁₋₁₀ chain aliphatic hydrocarbon group-divalent C₃₋₁₀ cyclic aliphatic hydrocarbon group-monovalent C₁₋₁₀ chain aliphatic hydrocarbon group.

The substituent number of the fluoro group in the aliphatic hydrocarbon group having the fluoro group is not particularly restricted as long as the substitution is possible. The larger the number of the fluoro group is, the higher the reactivity of the fluorocarbonate compound (I) becomes. Thus, the number is preferably 2 or more and more preferably 3 or more. With respect to the upper limit of the above-described substituent number, the number may be adjusted to, for example, 20 or less, and is preferably 15 or less. The aliphatic hydrocarbon group is preferably a sec-alkyl group or a tert-alkyl group. The Rf¹ is preferably -CH₂Rf³, -CH(Rf³)₂ or -C(Rf³)₃ wherein Rf³ is a perfluoro C₁₋₅ alkyl group, and a plurality of Rf³ is the same as or different from each other, and is more preferably a di(trifluoromethyl)methyl group [CH(CF₃)₂] or a tri(trifluoromethyl)methyl group [C(CF₃)₃], of which all of the hydrogen atoms are substituted with fluoro groups at the carbon other than the 1-position carbon. In addition, the fluorocarbonate compound (I) may be substituted with a halogeno group selected from chloro, bromo and iodo as a similar electron withdrawing group in addition to fluoro. It is preferred that the α-position carbon adjacent to the carbonate group (-O-C(=O)-O-) is not substituted with fluoro, and the α-position group is preferably a methylene group (-CH₂-) or a methine group (>CH-).

If the fluorocarbonate compound (I) is commercially available, the commercial product may be used. Alternatively, the compound may be synthesized. In particular, for example, the fluorocarbonate compound (I) can be synthesized by an ordinary method using phosgene and can be also synthesized by the reaction between a fluoro aliphatic hydrocarbon ester of trichloroacetic acid and a fluoroalcohol or the method described in WO 2018/211953 without using phosgene.

An example of the fluorocarbonate compound includes bis(2,2,2-trifluoroethyl)carbonate, bis(2,2,3,3-tetrafluoropropyl)carbonate, bis(1,1,1,3,3,3-hexafluoroisopropyl)carbonate, bis(1,1,1,2,2,4,5,5,5-nonafluoro-4-trifluoromethyl-3-pentyl) carbonate, bis[1,1,1,3,3,3-hexafluoro-2-(trifluoromethyl)propane-2-yl]carbonate, bis(2,2,3,3,3-pentafluoropropyl)carbonate, bis(2,2,3,3,4,4,5,5-octafluoropentyl)carbonate and bis(2,2,3,3,4,4,5,5-octafluorocyclopentyl)carbonate.

Two of the Rf¹ in the fluorocarbonate compound may be the same as or different from each other and are preferably the same as each other.

The R¹ in the polyol compound (II) is an n-valent organic group wherein n is an integer of 3 or more and 8 or less. An example of the R¹ includes an n-valent C₁₋₁₀ chain aliphatic hydrocarbon group, an n-valent C₃₋₁₀ cyclic aliphatic hydrocarbon group, an n-valent C₆₋₁₅ aromatic hydrocarbon group, and an n-valent organic group formed by binding 2 or more and 5 or less of the C₁₋₁₀ chain aliphatic hydrocarbon group, the C₃₋₁₀ cyclic aliphatic hydrocarbon group and the C₆₋₁₅ aromatic hydrocarbon group. The n is preferably 6 or less, more preferably 5 or less, and even more preferably 3 or 4. Hereinafter, the R¹ in the case of n=4 is representatively described. When the n is an integer other than 4, the following exemplified valent number may be replaced by the valent number of n.

The "tetravalent C₁₋₁₀ chain aliphatic hydrocarbon group" among the n-valent C₁₋₁₀ chain aliphatic hydrocarbon group means a linear or branched tetravalent saturated aliphatic hydrocarbon group or tetravalent unsaturated aliphatic hydrocarbon group having a carbon number of 1 or more and 10 or less. An example of the tetravalent C₁₋₁₀ chain aliphatic hydrocarbon group includes a C₁₋₁₀ alkane-tetrayl group, a C₂₋₁₀ alkene-tetrayl group and a C₂₋₁₀ alkyne-tetrayl group.

An example of the C₁₋₁₀ alkane-tetrayl group includes methane-tetrayl, ethane-tetrayl, n-propane-tetrayl, isopropane-tetrayl, n-butane-tetrayl, 1-methylpropane-tetrayl, 2-methylpropane-tetrayl, 1,1-dimethylethane-tetrayl, 2,2-dimethylethane-tetrayl, n-pentane-tetrayl, n-hexane-tetrayl, n-heptane-tetrayl, n-octane-tetrayl, n-nonane-tetrayl and n-decane-tetrayl. The group is preferably a C₂₋₈ alkane-tetrayl group and more preferably a C₂₋₆ alkane-tetrayl group.

An example of the C₂₋₁₀ alkene-tetrayl group includes ethene-tetrayl, 1-propene-tetrayl, 2-propene-tetrayl, butene-tetrayl, hexene-tetrayl, octene-tetrayl, nonene-tetrayl and decene-tetrayl. The group is preferably a C₂₋₈ alkene-tetrayl group.

An example of the C₂₋₁₀ alkyne-tetrayl group includes propyne-tetrayl, butyne-tetrayl, hexyne-tetrayl, octyne-tetrayl, nonyne-tetrayl and decyne-tetrayl. The group is preferably a C₂₋₈ alkyne-tetrayl group.

The "tetravalent C₃₋₁₀ cyclic aliphatic hydrocarbon group" means a tetravalent cyclic saturated aliphatic hydrocarbon group or a tetravalent cyclic unsaturated aliphatic hydrocarbon group having a carbon number of 3 or more and 10 or less, and the number of the ring may be 1 or 2 or more. An example of the group includes a C₃₋₁₀ cycloalkane-tetrayl group, a C₃₋₁₀ cycloalkene-tetrayl group and a C₃₋₁₀ cycloalkyne-tetrayl group. An example of the C₃₋₁₀ cycloalkane-tetrayl group includes cyclobutane-tetrayl, cyclopropane-tetrayl, cyclohexane-tetrayl and adamantane-tetrayl.

The "tetravalent C₆₋₁₅ aromatic hydrocarbon group" means a tetravalent aromatic hydrocarbon group having a carbon number of 6 or more and 15 or less. An example of the group includes benzene-tetrayl, indene-tetrayl, naphthalene-tetrayl, biphenyl-tetrayl, phenalene-tetrayl, phenanthrene-tetrayl and anthracene-tetrayl. The group is preferably a tetravalent C₆₋₁₂ aromatic hydrocarbon group and more preferably benzene-tetrayl.

An example of the n-valent organic group formed by binding 2 or more and 5 or less groups selected from the C₁₋₁₀ chain aliphatic hydrocarbon group, the C₃₋₁₀ cyclic aliphatic hydrocarbon group and the C₆₋₁₅ aromatic hydrocarbon group includes an n-valent organic groups of a C₃₋₁₀ cyclic aliphatic hydrocarbon group-C₁₋₁₀ chain aliphatic hydrocarbon group, a C₁₋₁₀ chain aliphatic hydrocarbon group-C₃₋₁₀ cyclic aliphatic hydrocarbon group, a C₆₋₁₅ aromatic hydrocarbon group-C₁₋₁₀ chain aliphatic hydrocarbon group, a C₁₋₁₀ chain aliphatic hydrocarbon group-C₆₋₁₅ aromatic hydrocarbon group, a C₁₋₁₀ chain aliphatic hydrocarbon group-C₃₋₁₀ cyclic aliphatic hydrocarbon group-C₁₋₁₀ chain aliphatic hydrocarbon group, a C₃₋₁₀ cyclic aliphatic hydrocarbon group-C₁₋₁₀ chain aliphatic hydrocarbon group-C₃₋₁₀ cyclic aliphatic hydrocarbon group, and a C₁₋₁₀ chain aliphatic hydrocarbon group-C₆₋₁₅ aromatic hydrocarbon group-C₁₋₁₀ chain aliphatic hydrocarbon group.

The R¹: n-valent organic group in the polyol compound (II) may be substituted with 1 or more halogeno groups selected from fluoro, chloro, bromo and iodo. The substituent group is preferably fluoro. The n-valent C₁₋₁₀ chain aliphatic hydrocarbon group and the n-valent C₃₋₁₀ cyclic aliphatic hydrocarbon group may have an ether group (-O-), and the n-valent C₃₋₁₀ cyclic aliphatic hydrocarbon group and the n-valent C₆₋₁₅ aromatic hydrocarbon group may be substituted with a C₁₋₆ alkyl group in addition to a halogeno group.

The R² in the polyol compound (II) is a divalent organic group having a carbon number of 2 or more. The inventors of the present invention experimentally found that a cyclic compound may be produced from the polyol compound and the fluorocarbonate compound (I) depending on the carbon number of the polyol compound as a side reaction but such a side reaction can be inhibited by the combination of the R¹ and the divalent organic group R² having a carbon number of 2 or more.

An example of the R² includes a divalent C₂₋₁₀ chain aliphatic hydrocarbon group, the divalent C₃₋₁₀ cyclic aliphatic hydrocarbon group, the divalent C₆₋₁₅ aromatic hydrocarbon group, and the divalent organic group formed by binding 2 or more and 5 or less groups of the divalent C₁₋₁₀ chain aliphatic hydrocarbon group, the divalent C₃₋₁₀ cyclic aliphatic hydrocarbon group and the divalent C₆₋₁₅ aromatic hydrocarbon group.

The "divalent C₂₋₁₀ chain aliphatic hydrocarbon group" means a linear or branched divalent saturated aliphatic hydrocarbon group or divalent unsaturated aliphatic hydrocarbon group having a carbon number of 2 or more and 10 or less. An example of the divalent C₁₋₁₀ chain aliphatic hydrocarbon group includes a C₂₋₁₀ alkane-diyl group, a C₂₋₁₀ alkene-diyl group and a C₂₋₁₀ alkyne-diyl group.

An example of the C₂₋₁₀ alkane-diyl group includes ethanediyl, n-propane-diyl, isopropane-diyl, n-butane-diyl, 1-methylpropane-diyl, 2-methylpropane-diyl, 1,1-dimethylethane-diyl, 2,2-dimethylethane-diyl, n-pentane-diyl, n-hexane-diyl, n-heptane-diyl, n-octane-diyl, n-nonane-diyl and n-decane-diyl. The group is preferably a C₂₋₁₀ alkane-diyl group or a C₂₋₈ alkane-diyl group and more preferably a C₂₋₆ alkane-diyl group or a C₂₋₄ alkane-diyl group.

An example of the C₂₋₁₀ alkene-diyl group includes ethene-diyl, 1-propene-diyl, 2-propene-diyl, butene-diyl, hexene-diyl, octene-diyl, nonene-diyl and decene-diyl. The group is preferably a C₂₋₈ alkene-diyl group and more preferably a C₂₋₆ alkene-diyl group or a C₂₋₄ alkene-diyl group.

An example of the C₂₋₁₀ alkyne-diyl group includes ethyne-diyl, propyne-diyl, butyne-diyl, hexyne-diyl, octyne-diyl, nonyne-diyl and decyne-diyl. The group is preferably a C₂₋₈ alkyne-diyl group and more preferably a C₂₋₆ alkyne-diyl group or a C₂₋₄ alkyne-diyl group.

The "divalent C₃₋₁₀ cyclic aliphatic hydrocarbon group" means a divalent cyclic saturated or unsaturated aliphatic hydrocarbon group having a carbon number of 3 or more and 10 or less, and the number of the ring may be 1 or 2 or more. An example of the group includes a C₃₋₁₀ cycloalkane-diyl group, a C₃₋₁₀ cycloalkene-diyl group and a C₃₋₁₀ cycloalkyne-diyl group. An example of the C₃₋₁₀ cycloalkane-diyl group includes cyclobutane-diyl, cyclopropane-diyl, cyclohexane-diyl and adamantane-diyl.

The "divalent C₆₋₁₅ aromatic hydrocarbon group" means a divalent aromatic hydrocarbon group having a carbon number of 6 or more and 15 or less. An example of the group includes phenylene, indenylene, naphthylene, biphenylene, phenalenylene, phenanthrenylene and anthracenylene. The group is preferably a divalent C₆₋₁₂ aromatic hydrocarbon group and more preferably phenylene.

An example of the divalent organic group formed by binding 2 or more and 5 or less groups selected from the divalent C₁₋₁₀ chain aliphatic hydrocarbon group, the divalent C₃₋₁₀ cyclic aliphatic hydrocarbon group and the divalent C₆₋₁₅ aromatic hydrocarbon group includes a divalent C₃₋₁₀ cyclic aliphatic hydrocarbon group-divalent C₁₋₁₀ chain aliphatic hydrocarbon group, a divalent C₁₋₁₀ chain aliphatic hydrocarbon group-divalent C₃₋₁₀ cyclic aliphatic hydrocarbon group, a divalent C₆₋₁₅ aromatic hydrocarbon group-divalent C₁₋₁₀ chain aliphatic hydrocarbon group, a divalent C₁₋₁₀ chain aliphatic hydrocarbon group-divalent C₆₋₁₅ aromatic hydrocarbon group, a divalent C₁₋₁₀ chain aliphatic hydrocarbon group-divalent C₃₋₁₀ cyclic aliphatic hydrocarbon group-divalent C₁₋₁₀ chain aliphatic hydrocarbon group, a divalent C₃₋₁₀ cyclic aliphatic hydrocarbon group-divalent C₁₋₁₀ chain aliphatic hydrocarbon group-divalent C₃₋₁₀ cyclic aliphatic hydrocarbon group, and a divalent C₁₋₁₀ chain aliphatic hydrocarbon group-divalent C₆₋₁₅ aromatic hydrocarbon group-divalent C₁₋₁₀ chain aliphatic hydrocarbon group.

The R²: divalent organic group in the polyol compound (II) may be substituted with 1 or more halogeno groups selected from fluoro, chloro, bromo and iodo. The substituent group is preferably fluoro. The divalent C₁₋₁₀ chain aliphatic hydrocarbon group and the divalent C₃₋₁₀ cyclic aliphatic hydrocarbon group may contain an ether group (-O-), and the divalent C₃₋₁₀ cyclic aliphatic hydrocarbon group and the divalent C₆₋₁₅ aromatic hydrocarbon group may be substituted with a C₁₋₆ alkyl group in addition to a halogeno group.

The R² may be a group comprising the repeating unit represented by the formula: -[-O-R⁴-]- wherein R⁴ is a C₁₋₈ alkane-diyl group optionally substituted with a fluoro group. An example of the R⁴ includes an ethylene group (-CH₂CH₂-), a propylene group [-CH(CH₃)CH₂- or -CH₂CH(CH₃)-] and a tetramethylene group (-CH₂CH₂CH₂CH₂-), and the groups may be substituted with a fluoro group. The repetition number of the above-described repeating unit in each -R²-OH group in the polyol compound (II) is preferably 5 or more, more preferably 10 or more, even more preferably 20 or more, and preferably 100 or less, more preferably 50 or less.

The n-pieces of R² in the polyol compound (II) may be the same as or different from each other.

When the fluorocarbonate compound (I) and the polyol compound (II) are reacted, a solvent may be used. The solvent is not particularly restricted as long as the solvent is liquid under atmospheric temperature and ambient pressure and do not have a bad effect on the reaction. An example of the solvent includes a fluorine-containing solvent such as Asahiklin series manufactured by AGC, Novec series manufactured by 3M, Elnova series manufactured by TOKUYAMA METEL and 1,3-bis(trifluoromethyl)benzene; a nitrile solvent such as acetonitrile; an ether solvent such as diethyl ether, glyme, diglyme, triglyme, tetraglyme, tetrahydrofuran and dioxane; a ketone solvent such as acetone and methyl ethyl ketone; an ester solvent such as ethyl acetate; and a halogenated hydrocarbon solvent such as dichloromethane, chloroform and carbon tetrachloride. When at least one of the fluorocarbonate compound (I) and the polyol compound (II) is liquid in the reaction condition, a solvent may not be used. It is preferred not to use a solvent in terms of a cost and an environmental burden.

The amounts of the fluorocarbonate compound (I) and the polyol compound (II) may be appropriately adjusted. In general, n-times or more by mole of the polyol compound (II) to the polyol compound (II) is used for reacting n-pieces of hydroxy group of the polyol compound (II) and the fluorocarbonate compound (I). The molar number is preferably n×1.1 times or more by mole, more preferably n×1.2 times or more by mole and even more preferably n×1.25 times or more by mole. The upper limit of the molar number is not particularly restricted, and the molar number may be adjusted to, for example, n×5 times or less by mole. The molar number is preferably n×4 times or less by mole and more preferably n×3 times or less by mole.

The fluorocarbonate compound (I) and the polyol compound (II) may be reacted in the presence of a base in the Step 1. An example of the base includes an organic base such as pyridine, triethylamine, ethyldiisopropylamine, diazabicycloundecene (DBU), 1,4-diazabicyclo[2.2.2]octane (DABCO) and N-methylmorpholine; and an inorganic base such as sodium hydrogencarbonate, potassium hydrogencarbonate, sodium carbonate, potassium carbonate, cesium carbonate and calcium carbonate. An organic base is preferred in terms of the solubility in the reaction mixture and an appropriate basicity. The usage amount of the base may be appropriately adjusted, and for example, 0.01 times or more by mole and 1 time or less by mole of the base to the smaller molar number of the fluorocarbonate compound (I) or the polyol compound (II) may be used. A base may not be used in terms of a cost and a residue.

The reaction temperature may be appropriately adjusted and may be adjusted to, for example, 20°C or higher and 120°C or lower. The reaction may be conducted with heating to reflux depending on the used solvent. The reaction time may be also appropriately adjusted. The reaction may be conducted until the consumption of at least one of the fluorocarbonate compound (I) and the polyol compound (II) is confirmed by chromatography, NMR spectrum or the like. The reaction time may be determined by a preliminary experiment. For example, the reaction time may be adjusted to 1 hour or more and 50 hours or less.

A general aftertreatment may be conducted after the reaction. For example, water and a water-insoluble solvent such as a fluorine-containing solvent, diethyl ether, chloroform and ethyl acetate are added to the reaction mixture, and the organic phase and the aqueous phase are separated to extract the carbonate compound (III) as the target compound in the organic phase. The organic phase may be washed using water and saturated aqueous sodium chloride solution and dried over anhydrous sodium sulfate and anhydrous magnesium sulfate. The carbonate compound (III) can be obtained by concentrating the organic phase. The obtained carbonate compound (III) may be further purified by chromatography, recrystallization or the like or directly used in the following Step 2.

### 2. Production step of polyurethane

Polyurethane is produced by reacting the carbonate compound (III) produced by the above-described Step 1 and the amino compound (IV) in this step.

The other carbonate compound may be used in combination with the carbonate compound (III) to be co-polymerized in this step. An example of the other carbonate compound includes the biscarbonate (V). The Rf² in the biscarbonate (V) is an aliphatic hydrocarbon having a fluoro group. An example of the Rf² in the biscarbonate (V) includes the same fluorine-containing aliphatic hydrocarbon as the Rf¹ in the fluorocarbonate compound (I). The Rf² in the biscarbonate (V) may be the same as or different from the Rf¹ in the fluorocarbonate compound (I).

The R³ in the biscarbonate (V) is a divalent organic group. An example of the R³ in the biscarbonate (V) includes the same divalent organic group as the R² in the polyol compound (II). The R⁵ in the biscarbonate (V) may be the same as or different from the R² in the polyol compound (II). The R² and R³ are preferably different from each other in terms of various properties of the polyurethane as the target compound.

The usage amount of the biscarbonate (V) may be appropriately adjusted and may be adjusted to, for example, 1 time or more by mole and 200 times or less by mole to the carbonate compound (III). When the ratio is 1 time or more by mole, the progression of the polymerization reaction by the biscarbonate (V) and the increase in molecular weight can be expected more reliably. When the ratio is 200 times or less by mole, the improvement of polyurethane properties due to branching caused by the carbonate compound (III) can be expected more reliably. The ratio is preferably 2 times or more by mole or 5 times or more by mole, more preferably 10 times or more by mole, and preferably 150 times or less by mole, more preferably 100 times or less by mole.

The R³ in the amino compound (IV) is a divalent organic group. An example of the R³ in the amino compound (IV) includes the same divalent organic group as the R² in the polyol compound (II). The R³ in the amino compound (IV) may be the same as or different from the R² in the polyol compound (II). The R², R³ and R⁵ are preferably different from each other in terms of the various properties of the polyurethane as the target compound.

When the carbonate compound (III) and the amino compound (IV) are reacted, a solvent may be used. The solvent is not particularly restricted as long as the solvent is liquid under atmospheric temperature and ambient pressure and does not have a bad effect on the reaction. An example of the solvent includes a fluorine-containing solvent such as Asahiklin series manufactured by AGC, Novec series manufactured by 3M, Elnova series manufactured by TOKUYAMA METEL and 1,3-bis(trifluoromethyl)benzene; an aromatic hydrocarbon solvent such as benzene, toluene and chlorobenzene; a nitrile solvent such as acetonitrile; an ether solvent such as diethyl ether, tetrahydrofuran and dioxane; an ester solvent such as ethyl acetate; a halogenated hydrocarbon solvent such as dichloromethane, chloroform and carbon tetrachloride; a hydrocarbon solvent such as pentane and hexane; a ketone solvent such as acetone and methyl ethyl ketone; an amide solvent such as dimethylformamide and dimethylacetamide; and a sulfoxide solvent such as dimethylsulfoxide. When at least one of the carbonate compound (III) and the amino compound (IV) is liquid in the reaction condition, a solvent may not be used. It is preferred not to use a solvent in terms of a cost and an environmental burden.

The amounts of the carbonate compound (III) and the amino compound (IV) may be appropriately adjusted. Since n/2-times by mole of the amino compound (IV) theoretically reacts to the carbonate compound (III). But, since two or more-dimensional polyurethane actually becomes solidified and thus the polymerization reaction hardly proceeds anymore, n×0.2-times or more by mole of the amino compound (IV) is generally used to the carbonate compound (III). The molar ratio is preferably n×0.3-times or more by mole and more preferably n×0.4-times or more by mole. The upper limit of the molar ratio is not particularly restricted, and the molar ratio may be adjusted to, for example, n×2-times or less by mole. The molar ratio is preferably n×1.5-times or less by mole and more preferably n×1-time or less by mole.

The reaction temperature of this Step 2 may be appropriately adjusted and may be adjusted to, for example, 10°C or higher and 150°C or lower. The reaction may be conducted with heating to reflux depending on the used solvent. The reaction time may be also appropriately adjusted. The reaction may be conducted until the consumption of at least one of the carbonate compound (III) and the amino compound (IV) is confirmed by chromatography, NMR spectrum or the like. The reaction time may be determined by a preliminary experiment. For example, the reaction time may be adjusted to 30 minutes or more and 10 hours or less.

A general aftertreatment may be conducted after the reaction. For example, the polyurethane as the target compound may be washed with an inert solvent such as n-hexane, since the polyurethane is a polymer and insoluble in a solvent. The polyurethane may be dried only after washing or without washing.

The polyurethane can be produced easily, safely and efficiently without using a highly toxic isocyanate compound by the present invention. In addition, since the polyurethane produced by the present invention has a two or more-dimensional chemical structure due to the branched carbonate compound (III), the polyurethane is excellent in strength, heat resistance, chemical resistance, weather resistance or the like. Furthermore, desired properties such as high strength, flexibility and repellency can be further improved by the combination of the two divalent organic groups, specifically the R² in the carbonate compound (III) and the R³ in the amino compound (IV), in the molecular structure unit thereof. Also, the quality of the polyurethane may become higher in some cases by the remaining fluoroalcohol.

### EXAMPLES

The present application claims the benefit of the priority date of Japanese patent application No. 2021-179763 filed on November 2, 2021. All of the contents of the Japanese patent application No. 2021-179763 filed on November 2, 2021, are incorporated by reference herein.

Hereinafter, the examples are described to demonstrate the present invention more specifically, but the present invention is in no way restricted by the examples, and the examples can be appropriately modified to be carried out within a range that adapts to the contents of this specification. Such a modified example is also included in the technical range of the present invention.

### Example 1: Synthesis of polyurethane

### (1) Carbonate modification of OH terminal of FPEGQA40 by BHFC

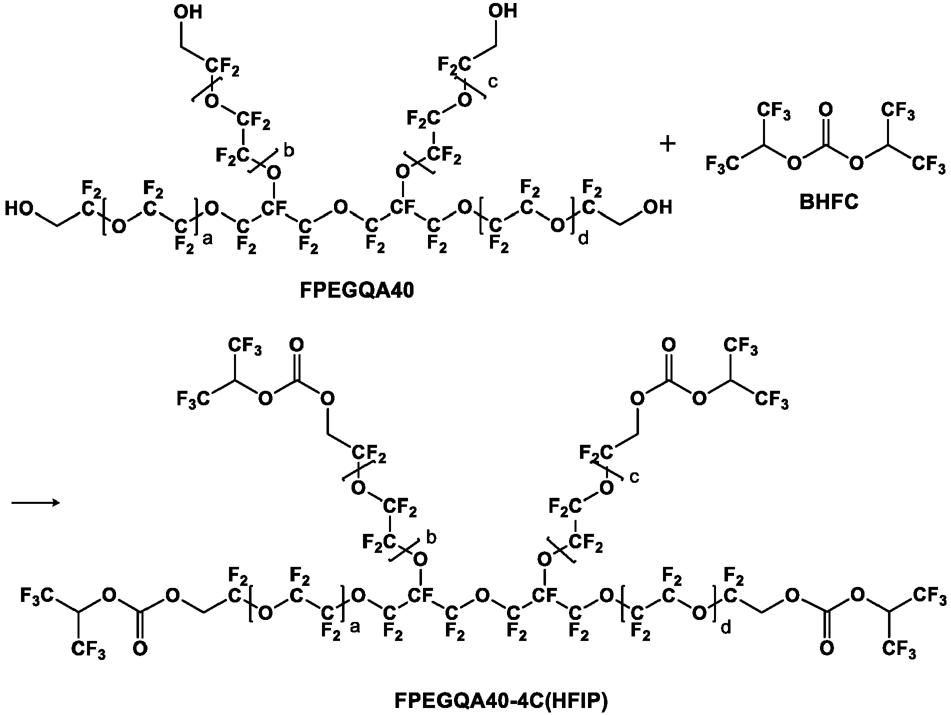

FPEGQA40 (0.50 mmol, 2.0 g), BHFC (6.0 mmol, 2.35 g) and pyridine (0.2 mmol, 16.0 µL) were added into a 10 mL round-bottom flask, and the mixture was stirred at 30°C for 22 hours. Then, 1 M hydrochloric acid, chloroform and hydrofluoroether ("Novec7100" manufactured by 3M) were added thereto, and the organic phase and the aqueous phase were separated. The organic phase was washed with water and then dried over anhydrous sodium sulfate. The solvent was removed by evaporation under reduced pressure to quantitatively obtain the target compound [FPEGQA40-4C(HFIP)] (2.18 g).
¹H NMR (400 MHz, CDCl₃, 293 K) δ5.52(s, 4H, CH), 4.51(s, 8H, CH)
¹⁹F NMR (376 MHz, CDCl₃, 293 K) δ-75.82(s, CF₃), -79.76(s, CF₂), -83.55(s, CF), -90.39(s, CF₂)
IR(ATR) ν2984, 1798, 1188, 1108, 1048, 992, 690 cm⁻¹

### (2) Synthesis of polyurethane from FPEGQA40-4C(HFIP) and HDA

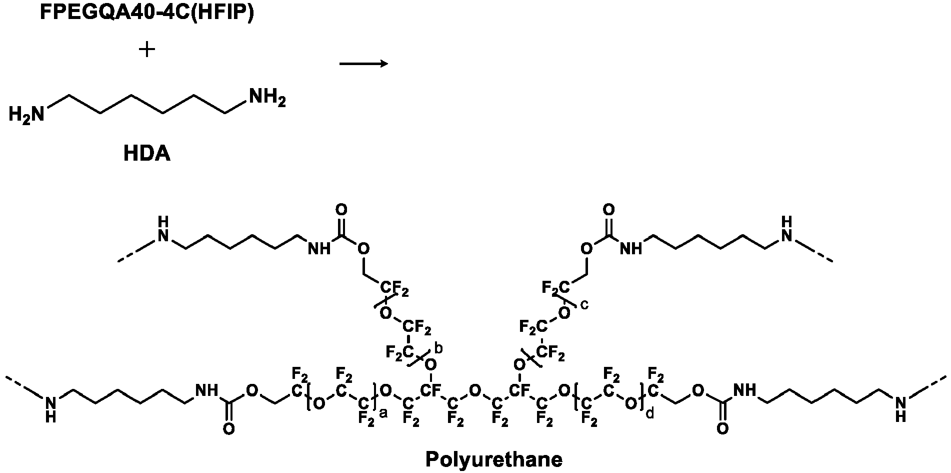

FPEGQA40-4C(HFIP) (0.021 mmol, 105.7 mg), HDA (0.059 mmol, 6.9 mg) and THF (0.5 mL) were added to a 10 mL round-bottom flask, and the mixture was stirred at 30°C for 1 hour. Then, the solvent and the produced alcohol were removed by evaporation under reduced pressure, and the residue was dried in vacuo at 50°C for 1 hour to quantitatively obtain the target compound as a white insoluble solid (97 mg).

The produced solid was analyzed by infrared absorption spectroscopy; as a result, it was confirmed that polyurethane was produced, since the absorption at 1724 cm⁻¹ derived from the carbonyl group in the urethane bond was recognized.
IR (ATR) ν3335, 2941, 1724, 1523, 1184, 1109, 977, 687 cm⁻¹

### Example 2: Synthesis of polyurethane from FPEGQA40-4C(HFIP) and JEFFAMINE(D-400)

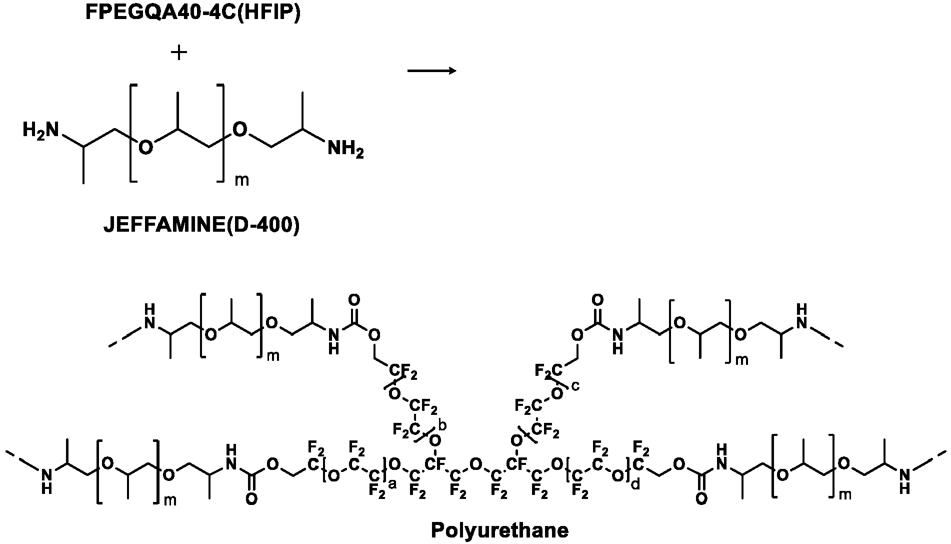

FPEGQA40-4C(HFIP) (0.021 mmol, 105.7 mg), JEFFAMINE(D-400) (0.050 mmol, 20.3 mg) and THF (0.5 mL) were added into a 10 mL round-bottom flask, and the mixture was stirred at 30°C for 1 hour. Then, the solvent and the produced alcohol were removed by evaporation under reduced pressure, and the residue was dried in vacuo at 50°C for 1 hour to quantitatively obtain the target compound as a white insoluble solid (113 mg).

The produced solid was analyzed by infrared absorption spectroscopy; as a result, it was confirmed that polyurethane was produced, since the absorption at 1743 cm⁻¹ derived from the carbonyl group in the urethane bond was recognized. This absorption peak was shifted in comparison with the absorption at 1724 cm⁻¹ of the compound produced by Example 1 due to the substitution of the methyl group on the carbon adjacent to the nitrogen atom in the urethane bond.
IR (ATR) ν3336, 2977, 2876, 1743, 1515, 1185, 1107, 989, 687 cm⁻¹

### Example 3: Synthesis of polyurethane from 12F4EG-BC(HFIP) and FPEGQA40-4C(HFIP) and JEFFAMINE(D-400)

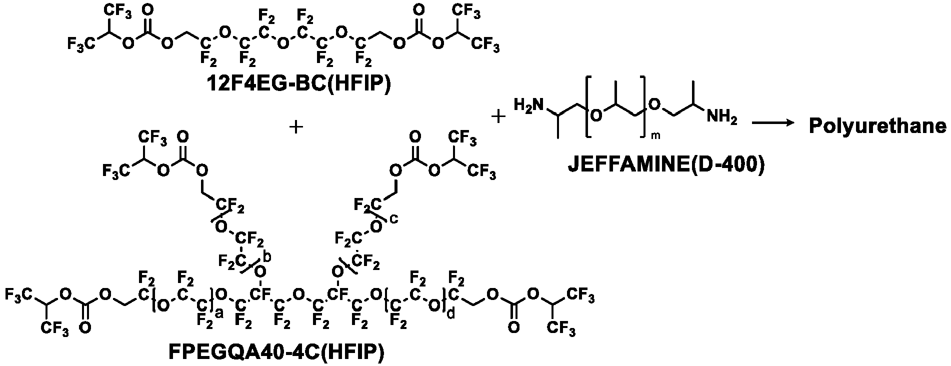

FPEGQA40-4C(HFIP) (0.021 mmol, 102.08 mg), 12F4EG-BC(HFIP) (0.21 mmol, 168 mg), JEFFAMINE(D-400) (0.25 mmol, 101 mg) and THF (0.5 mL) were added into a 10 mL round-bottom flask, and the mixture was stirred at room temperature for 2.5 hours. Then, the solvent and the produced alcohol were removed by evaporation under reduced pressure to quantitatively obtain the target compound as a wax-like copolymer (309 mg).

The produced copolymer was analyzed by infrared absorption spectroscopy; as a result, it was confirmed that polyurethane was produced, since the absorption at 1739 cm⁻¹ derived from the carbonyl group in the urethane bond was recognized.

The product could be dissolved in an organic solvent to some extent and thus the average molecular weight was measured by HPLC. As a result, the average molecular weight was determined as M_{w} = 22000, Mₙ = 13700 and M_{w}/Mₙ = 1.60.

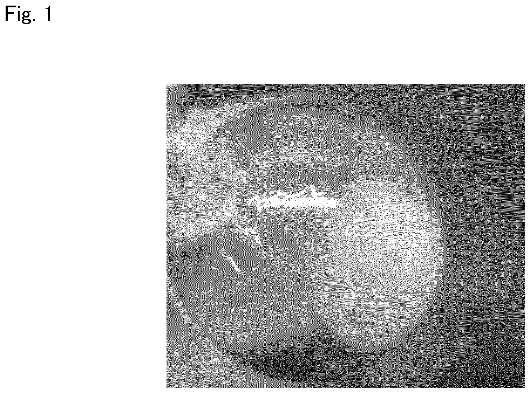

The photograph of the produced copolymer is shown as Figure 1. The produced polyurethane was colorless white as Figure 1. ¹H NMR (400 MHz, CDCl₃, 293 K) δ6.01-6.07(br, NH), 4.47-4.38(br, CH₂), 3.82(s, CH), 3.58-3.40(br, CH and CH₂), 1.21-1.09(m, CH₃)
¹⁹F NMR (376 MHz, CDCl₃, 293 K) δ-73.57(s), -75.67(s),-75.68(s), -75.84(br), -77.2(br), -88.55(br), -88.77(s), - 89.19(br), -90.46(br)
IR (ATR) v3330, 2976, 2877, 1797, 1739, 1530, 1378, 1289, 1199, 1108, 990, 688 cm⁻¹

### Comparative example 1: Reaction of 1,2,4-butanetriol and B4FPC

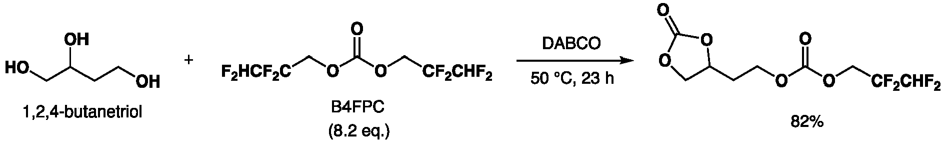

Into a 50 mL round-bottom flask, 1,2,4-butanetriol (10 mmol, 1.07 g), B4FPC (82 mmol, 23.77 g) and 1,4-diazabicyclo[2.2.2]octane (DABCO) (3 mmol, 0.34 g) were added. The mixture was stirred at 50°C for 23 hours. Then, the unreacted B4FPC and 2,2,3,3-tetrafluoro-1-propanol produced by the reaction were removed by evaporation under reduced pressure, and the residue was dried in vacuo at 100°C for 2 hour to obtain colorless viscous liquid.

The produced liquid was analyzed; as a result, the liquid was identified as 2-(2-oxo-1,3-dioxolane-4-yl)ethyl (2,2,3,3-tetrafluoropropyl)carbonate (2.39 g, 8.24 mmol, yield: 82%). It was found from the result that if a polyol is not appropriately selected, a cyclic compound is produced and thus the polymerization reaction does not proceed.
¹H NMR (400 MHz, CDCl₃, 293 K) δ5.90(tt, J=52.8, 3.6Hz, 1H, CHF₂), 4.86(qd, J=8.0, 5.2Hz, 1H, CH), 4.59(dd, J=8.6, 7.6Hz, 1H, CH₂), 4.53(tq, J=12.8, 1.2Hz, 2H, CH₂CF₂), 4.44-4.31 (m, 2H, CH₂), 4.14(dd, J=8.4, 7.2Hz, 1H, OCH₂), 2.22-2.07 (m, 2H, CH₂) ¹³C NMR(100 MHz, CDCl₃, 293 K) δ154.6, 153.8, 113.8 (tt, ¹J_{C-F}=198.9Hz, ²J_{C-F}=22.6Hz), 109.2(tt, ¹J_{C-F}=227.3Hz, ²J_{C-F}=28.4Hz), 73.8(s), 69.2(s), 64.4(s), 62.9 (t, J=23.4Hz), 33.0(s)
¹⁹F NMR (376 MHz, CDCl₃, 293 K) δ-124.08 (td, J=12.0, 3.0Hz, 2F, CF₂), -137.53 (d, J=53.0Hz, 2F, CHF₂)
IR (ATR) ν2979, 2926, 1792, 1758, 1395, 1265, 1173, 1100, 1061, 963, 836, 774 cm⁻¹
MS (ESI Orbitrap) m/z: [M+H]⁺ Calcd for C₉H₁₁F₄O₆ 291.0492; Found 291.0488

### Comparative example 2: Reaction of trimethylolpropane and B4FPC

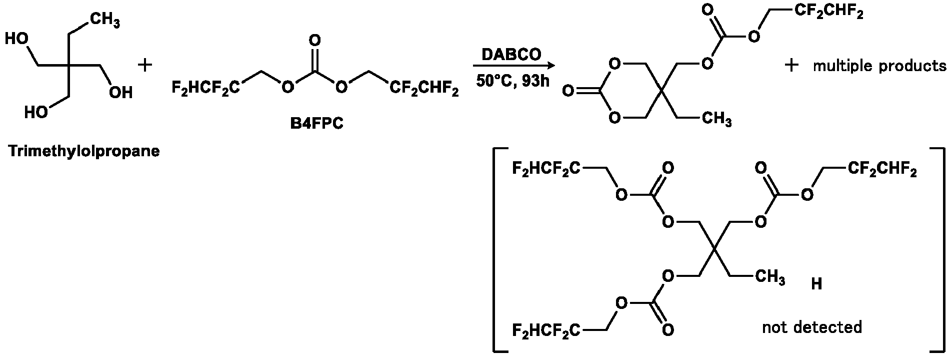

Trimethylolpropane (10 mmol, 1.34 g), B4FPC (60 mmol, 17.41 g) and 1,4-diazabicyclo[2.2.2]octane (DABCO) (3 mmol, 0.34 g) were added into a 50 mL round-bottom flask, and the mixture was stirred at 50°C for 93 hours. Then, the unreacted B4FPC and 2,2,3,3-tetrafluoro-1-propanol produced by the reaction were removed by evaporation under reduced pressure, and the residue was dried in vacuo at 100°C for 2 hours to obtain pale yellow viscous liquid.

It was clear by ¹H NMR, ¹⁹F NMR and mass spectrometry that the a plurality of compounds such as a cyclic compound were produced, but the compounds could not be purified by distillation under reduced pressure and chromatography. In addition, a chain compound of which all of the OH groups were substituted with a carbonate was not detected. The analysis result of the obtained mixture is hereinafter described.
¹H NMR (400 MHz, CDCl₃, 293 K) δ5.92 (tt, J=52.8, 3.6Hz, CHF₂), 5.91(tt, J=52.8, 3.6Hz, CHF₂), 4.56(tt, J=3.1, 1.2Hz, CH₂), 4.53(tt, J=3.1, 1.2Hz, CH₂), 4.33-4.13(m, CH₂), 1.59-1.53(m, CH₂) , 0.98-0.91 (m, CH₃)
¹⁹F NMR (376 MHz, CDCl₃, 293 K) δ-124.00(td, J=12.0, 3.0Hz, CF₂), -124.14(td, J=12.0, 3.0Hz, CF₂), -137.40(t, J=54.5Hz, CHF₂) , -137.74 (t, J=54.5Hz, CHF₂)
MS (ESI Orbitrap) m/z: [cyclic compound] [M+H]⁺ Calcd for C₁₁H₁₅F₄O₆ 319.0805; Found 319.0805

### Example 4: Synthesis of polyurethane from 12F4EG-BC(HFIP) and FPEGQA40-4C(HFIP) and JEFFAMINE(D-400)

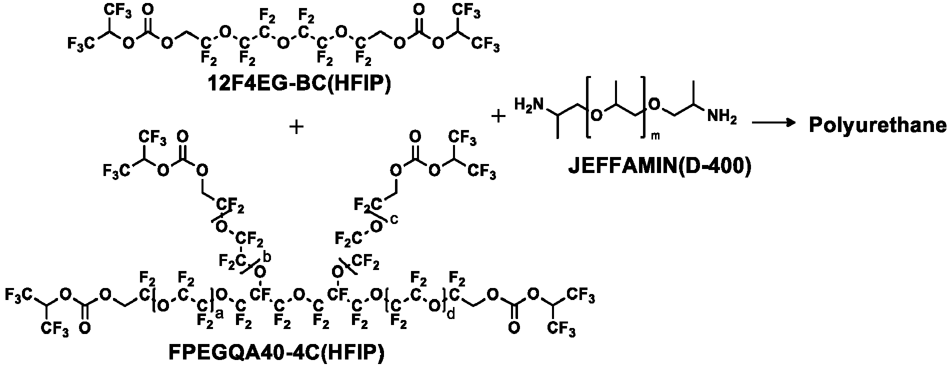

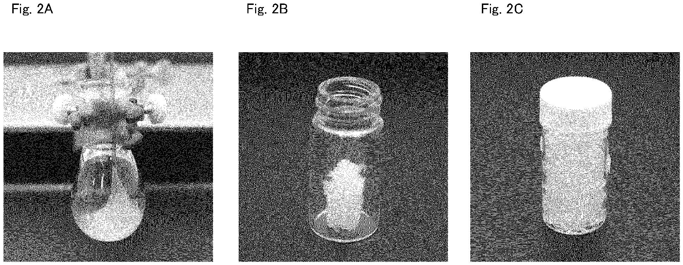

Example 3 was repeated again with increasing the scale of the experiment. FPEGQA40-4C(HFIP) (0.105 mmol, 0.5 g), 12FEG-BC(HFIP) (1.05 mmol, 0.84 g), JEFFAMINE(D-400) (1.26 mmol, 0.5 g) and THF (2.5 mL) were added into a 10 mL round-bottom flask, and the mixture was stirred at room temperature for 2 hours. As a result, an insoluble polymer was produced, and the reaction mixture caused gellation (Figure 2A). The product was transferred into a 13.5 mL sample bottle to be air-dried to obtain a xerogel (Figure 2B). THF was added to the xerogel; as a result, 8 mL of THF was totally absorbed into the xerogel and the xerogel was swollen (Figure 2C).

The polymerization degree of the polyurethane might become high by increasing the scale in comparison with Example 3.

In addition, the polyurethane produced from FPEGQA40-4C(HFIP) and JEFFAMINE(D-400) only is oily. On the one hand, the polyurethane produced by the present invention method may have the above-described properties, since the polyurethane is cross-linked, has a network structure, and is insoluble but has stretchability.

### Example 5: Synthesis of polyurethane

### (1) Synthesis of tricarbonate from triol-type polypropylene glycol

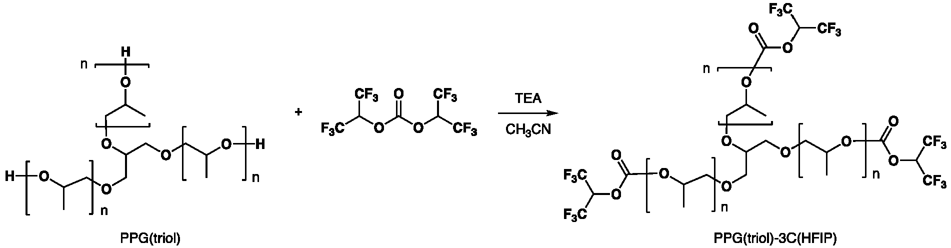

Acetonitrile (1 mL), triol-type polypropylene glycol [PPG(triol)] (average molecular weight M_{w} = 1500, hydroxy group value: 100 to 120) (1.0 g, hydroxy group was estimated at 2.14 mmol), BHFC (3.21 mmol, 1.26 g) and triethylamine (0.21 mmol, 30 µL) were added into a 10 mL round-bottom flask, and the mixture was stirred at room temperature for 2 days. Then, the solvent and the produced alcohol were removed by evaporation under reduced pressure to quantitatively obtain the target compound [PPG(triol)-3C(HFIP)] (1.59 g).
¹H NMR (400 MHz, CDCl₃, 293 K) δ5.57(sep, J=5.6Hz, 2H, CH), δ5.01(sep, J=5.6Hz, 2H, CH), 4.47-4.40(m, 1H, CH), 3.71-3.31 (m, 53H, CH and CH₂), 1.34 (d, J=4.8Hz, 3H, CH₃), 1.33 (d, J=4.8Hz, 3H, CH₃), 1.15-1.10(m, 42H, CH₃)
¹⁹F NMR (376 MHz, CDCl₃, 293 K) δ-73.52 to -73.55(m, CF₃),-75.59(s, CF₃), -75.61(s, CF₃)
¹³C NMR(100 MHz, CDCl₃, 293 K) δ152.5, 122.1(q. ¹J_{C-F}=280.0Hz), 120.3(q. ¹J_{C-F}=280.0Hz), 76.1, 75.9, 75.6, 75.4, 75.2, 75.0, 74.2, 73.6, 73.5, 73.3, 72.8, 71.6, 71.4, 71.1, 71.0, 70.4, 70.1, 69.7, 69.4, 69.1, 68.8, 68.5, 68.1, 17.2, 17.1, 17.0, 16.2, 16.1
IR (ATR) ν2974, 2873, 1775, 1456, 1376, 1299, 1260, 1200, 1101, 1009, 907, 839, 687 cm⁻¹

### (2) Synthesis of polyurethane from tricarbonate and xylylenediamine

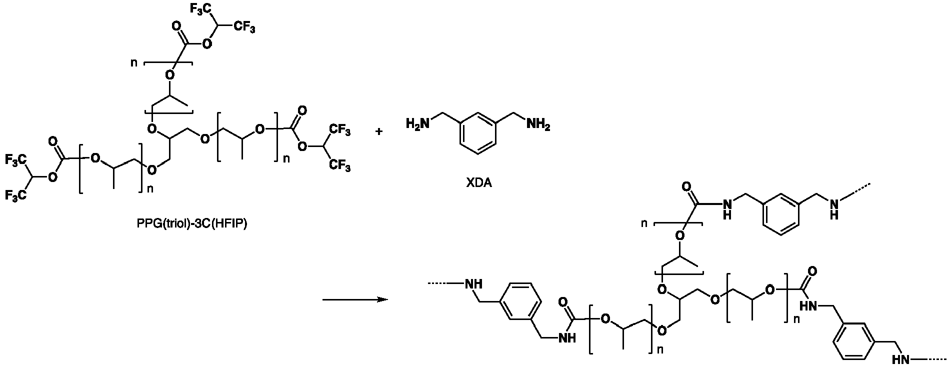

THF (1 mL), tricarbonate [PPG(triol)-3C(HFIP)] (0.1 g, carbonate unit was estimated at 0.135 mmol) and m-xylylenediamine (0.122 mmol, 15.6 µL) were added into a 10 mL round-bottom flask, and the mixture was stirred at room temperature for 24 hours. Then, the solvent and the produced alcohol were removed by evaporation under reduced pressure, and the residue was dried in vacuo at 100°C for 1 hour to obtain the milky oily target compound (73 mg).

The product was analyzed by infrared absorption spectroscopy; as a result, it was confirmed that polyurethane was produced, since the absorption at 1715 cm⁻¹ derived from the carbonyl group in the urethane bond was recognized. This absorption peak was shifted in comparison with the absorption at 1775 cm⁻¹ of the compound produced by Example 2 due to the substitution of the methyl group on the carbon adjacent to the nitrogen atom in the urethane bond.

The average molecular weight of the polyurethane was measured by HPLC; as a result, the average molecular weight was estimated at M_{w} = 3750, Mₙ = 3600, M_{w}/Mₙ = 1.04.
¹H NMR (400 MHz, CDCl₃, 293 K) δ7.34-7.28(m, Ph), 7.23-7.17(m, 2.5H, Ph), 5.31(brs. 0.7H, NH), 4.95(brs. 1H, CH), 4.36-4.31(m, 2.3H, CH), 3.87(s. 0.7H, CH₂), 3.85(s. 0.7H, CH₂), 3.56-3.39(m, 23H, CH and CH₂), 1.26(s, 1.5H, CH₃), 1.24(s, 1.5H, CH₃), 1.14-1.13(m, 20H, CH₃)
IR (ATR) ν2972, 2930, 2870, 1715, 1530, 1452, 1374, 1249, 1096, 926, 844 cm⁻¹

## Claims

1. A method for producing polyurethane, the method comprising the steps of:
reacting a fluorocarbonate compound represented by the following formula (I) and a polyol compound represented by the following formula (II) to produce a carbonate compound represented by the following formula (III), 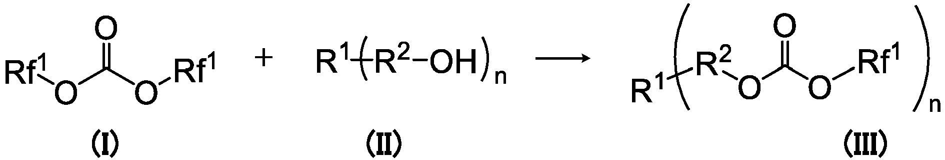 wherein
Rf¹ is independently a monovalent aliphatic hydrocarbon group having a fluoro group,
R¹ is an n-valent organic group,
R² is a divalent organic group having a carbon number of 2 or more,
n is an integer of 3 or more and 8 or less,
and reacting the carbonate compound represented by the formula (III) and an amino compound represented by the following formula (IV):
H₂N-R³-NH₂ (IV)
wherein R³ is a divalent organic group.

2. The method according to claim 1, wherein the fluorocarbonate compound represented by the formula (I) and the polyol compound represented by the formula (II) are reacted in the presence of a base.

3. The method according to claim 1, wherein the R¹ is an n-valent C₂₋₁₀ chain hydrocarbon group optionally substituted with a fluoro group and optionally having an ether group.

4. The method according to claim 1, wherein the R² is a divalent C₂₋₁₀ chain hydrocarbon group optionally substituted with a fluoro group and optionally having an ether group.

5. The method according to claim 1, wherein the R² comprises a repeating unit represented by the formula: -[-O-R⁴-]- wherein R⁴ is a C₁₋₈ alkane-diyl group optionally substituted with a fluoro group.

6. The method according to claim 1, wherein the R³ is a C₂₋₁₀₀ alkane-diyl group optionally substituted with a fluoro group and optionally having an ether group.

7. The method according to any one of claims 1 to 6, wherein a biscarbonate compound represented by the following formula (V) is used in addition to the carbonate compound represented by the formula (III) for copolymerization, 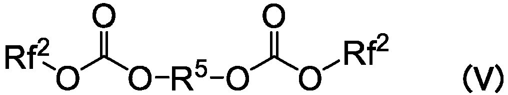 wherein
Rf² is independently a monovalent aliphatic hydrocarbon group having a fluoro group,
R³ is a divalent organic group.
